# EUROPEAN PATENT APPLICATION

(11) **EP 4 650 136 A1**
(43) Date of publication of application: **19.11.2025**
(21) Application number: 25176437.9
(22) Date of filing: 14.05.2025
(51) Int. Cl.: B29B 17/02, B29B 17/04, B29K 23/00, C08J 11/12

(54) **PLANT AND METHOD FOR SORTING POLYMERIC WASTE**

(30) Priority: 15.05.2024 IT 202400011035
(71) Applicant: Synextra S.p.A., 20094 Corsico (MI) (IT)
(72) Inventor: Chizzali, Sebastiano, 20094 Corsico (MI) (IT)
(74) Representative: Belloni, Giancarlo

(57) **Abstract**

The invention concerns a plant 20 for the production of a mixture of waste based on polyolefins and XPS suitable for feeding into a pyrolytic reactor. The plant comprises: a feeding station 22 that releases a flow of material to be treated 100; a first station 24 for removing the metal fragments 102; at least one optical separator 28 for removing the non-polyolefin polymers 106 and the textile and cellulosic fractions; a screen 30 for removing the foreign bodies 108 with dimensions smaller than a predefined minimum; a shredder 32 for reducing the particle size of the material to be treated; a second station 34 for removing the metal fragments; and an aeraulic separator 36 for separating the three-dimensional polyolefin fraction 110 from the two-dimensional polyolefin fraction 112. The invention also concerns a method for the production of a mixture of waste based on polyolefin and XPS, suitable for chemical recycling.

## Description

### TECHNICAL FIELD

The present invention refers to a plant and a method for sorting polymer-based waste, in particular for the separation of lighter fractions consisting of polyolefins starting from polymeric packaging deriving from the separate collection of municipal solid waste. Specifically, the plant and the method of the invention concern the production of a mixture of polyolefin-based polymeric waste suitable for feeding pyrolytic reactors, for the production of oil suitable for feeding into cracking reactors for the production of regenerated plastics.

### STATE OF THE ART

As part of the management of municipal solid waste, it has long been known to separately collect the different fractions such as, for example, glass, paper, plastic, metals, organic fraction and unseparate fraction. This type of collection, in which the different types of packaging are separated by the individual user, allows in general to obtain good results in waste management, increasing the recycled fractions and therefore decreasing the fraction that cannot be recycled and that must therefore be disposed of differently, for example in landfill or by waste-to-energy.

Despite the goodwill of the majority of users, it is inevitable that the fractions collected in a separate manner contain a portion of unwanted material, such as for example waste of different product category or foreign materials, such as aggregates or waste of different types. Therefore, in order to allow effective recycling in the final production industry, the separate waste must normally be treated in suitable plants downstream of the separate collection.

In this regard, the fraction of waste commonly called "plastic" deserves a particular mention, since it contains by its nature materials that, although they are characterized by a common product category nature, are actually made up of polymers with characteristics that are so different as to be unusable if not previously separated.

The most common polymers normally contained in the plastic fraction are: polypropylene (PP), polyethylene (PE), polyethylene terephthalate (PET), polystyrene (PS), polycarbonate (PC) and acrylonitrile-butadiene-styrene (ABS). In addition to these polymers, there is also polyvinylchloride (PVC) which, due to the presence of chlorine in the molecule, represents a problem for the post-collection treatment phases. In a manner known per se, the PVC portion must be separated from the remaining fractions before proceeding with any other heat or chemical treatment operation. For several years now, the sorting and recycling processes have allowed the production of secondary raw material of good quality suitable for subsequent reuse in industry.

In addition to the now consolidated methods of mechanical recycling of the various polymers, regulated not only by European and national legislation on waste but also by various technical standards, methods have been proposed for the chemical recycling of some specific polymeric fractions of the separate waste commonly called "plastics". These chemical recycling methods, which are based on pyrolysis first and cracking then, allow the long polymer chains to be divided, thus obtaining the monomers that represent the constituent elements thereof. The regenerated monomers thus obtained can then be reused again in the petrochemical industry to obtain new products. In particular, the polymers produced from regenerated monomers have characteristics completely similar to those of the polymers produced from virgin monomers, of certainly higher quality than the mechanically recycled polymers.

On the one hand, chemical recycling is the most desirable, since it allows to maintain a high value for the secondary raw material, it allows to reduce the use of new petroleum derivatives and it guarantees a high quality of the products obtained from the regenerated monomers. On the other hand, however, the same chemical recycling methodology is quite expensive when compared to mechanical recycling. However, chemical recycling can be adopted for sorted waste fractions that are currently practically not mechanically recyclable for technical or economic reasons. Therefore, chemical recycling is aimed at waste fractions that normally find application only for energy recovery, elevating them to recoverable for producing material, thus ascending in the hierarchical scale of waste treatment (from energy recovery to material recovery). However, as will be explained further below, the cracking process is only applicable for fractions that have been sorted extremely carefully. To date, therefore, chemical recycling can only be adopted in a few cases, thus involving a rather small portion of the total polymeric waste, subtracting it from the portion destined for energy recovery.

In addition to the variety of the polymers described above, it is necessary to consider the different structures with which they are used. In fact, the same polymer can be used to make a container such as a tray or a bottle, thus acquiring a three-dimensional structure. This container must have adequate mechanical characteristics to perform its structural function, for example to contain a food or drink and to be able to be handled with confidence, without deforming too much. Otherwise, the same polymer may also be employed in the form of a two-dimensional membrane, or film, which serves different purposes, typically to wrap or cover a product. Typically, the mechanical recycling industries focus their activity on the recycling of three-dimensional packaging and on the best two-dimensional packaging, typically coming from industrial and/or handicraft activities, while two-dimensional packaging is of little interest, especially if it is small in size or if coupled with other materials. For example, polyethylene (PE) is often coupled with aluminium in frozen food packaging.

Ultimately, of the total waste deriving from the separate collection of plastics, the fraction suitable for chemical recycling consists only of the two-dimensional portion of polypropylene (PP) and polyethylene (PE). Incidentally, together with polypropylene and polyethylene, there may also be a limited portion (less than 20%) of extruded polystyrene (XPS). However, as the control on the relative amounts of the different polymers introduces a further complication, the polystyrene is usually eliminated from the mixture destined for chemical recycling. The mixture to be obtained is therefore made up solely of polypropylene and polyethylene, which are two polyolefins. For this reason, reference will often be made in the following to the two-dimensional polyolefin fraction to indicate the desired mixture to be sent for chemical recycling.

The fraction consisting of two-dimensional fragments described above can be sent for chemical recycling, if the sorting processes succeed in making it suitable for the purpose. The characteristics common to the various downstream cracking processes require that this fraction consists almost entirely of two-dimensional polyolefins, thus providing for the almost total elimination of other plastic fractions, whether they are different polymers (non-polyolefinic such as PVC, PET, PS) or the same polymers but in the form of three-dimensional packaging. To date, this type of separation is quite complex to achieve with the required levels of efficiency.

The need is therefore felt for a new plant and a new method for the separation of polymer-based waste capable of making a mixture of polyolefin-based waste available.

### OBJECTS AND SUMMARY OF THE INVENTION

Aim of the present invention is therefore to overcome at least partially the drawbacks highlighted above in relation to the prior art.

In particular, a task of the present invention is to make available a plant and a method for sorting polymer-based waste, which allow to efficiently obtain a two-dimensional polyolefin mixture, solely by means of mechanical sorting processes.

Furthermore, a task of the present invention is to make available a plant and a method that allow to obtain a polyolefin mixture suitable for chemical recycling.

Finally, a task of the present invention is to make available a plant and a method for sorting a two-dimensional polyolefin mixture, which are particularly effective and reliable.

These and other objects and tasks of the present invention are achieved by means of a plant and a method for sorting polymer-based wastes in accordance with the appended claims. Further features are identified in the dependent claims. All appended claims form an integral part of the present disclosure.

In accordance with a first aspect, the invention concerns a plant for sorting polyolefin-based waste. The plant of the invention comprises:
- a feeding station, configured for receiving in input waste deriving from the separate collection of plastics and to dose the waste in order to release in output a flow of material to be treated having a controlled flow rate;
- a first station configured for removing the metal fragments from the flow of material to be treated;
- at least one optical separator configured for removing from the flow of material to be treated the non-polyolefin polymers, the cellulosic components and the textile components;
- a screen configured for removing from the flow of material to be treated the foreign bodies with dimensions smaller than a predefined minimum value;
- a shredder configured for reducing the particle size of the material to be treated to a predefined value;
- a second station for the removal of the metal fragments from the flow of material to be treated; and
- an aeraulic separator configured for separating the three-dimensional polyolefin fraction, comprising the polyolefin fragments with bulk density higher than a predefined threshold value, from the two-dimensional polyolefin fraction, comprising the polyolefin fragments with bulk density lower than the predefined threshold value.

The plant of the invention allows the two-dimensional polyolefin fraction, i.e. the fraction suitable for chemical recycling, to be obtained efficiently and on a large scale.

Preferably the first and/or the second station for the removal of the metal fragments from the material flow to be treated comprise a magnetic iron-remover and an Eddy Current Separator (ECS), i.e. a non-ferrous metal separator.

This solution allows an effective removal of all metal fragments, both with macroscopic dimensions (in the initial phases) and with smaller dimensions (in the more advanced phases).

Preferably, the plant of the invention further comprises, upstream of the shredder, an aeraulic separation machine configured for removing from the flow of material to be treated the heavy fractions, comprising fragments having a density higher than a predefined threshold value.

The aeraulic separation machine allows to eliminate from the flow of material to be treated the fragments that could damage the shredder.

Preferably the aeraulic separation machine comprises a main chamber, inside which a conveyor belt, a first collection element and a second collection element are arranged. The aeraulic separation machine further comprises a blower and air recirculation ducts. In the aeraulic separation machine:
- the conveyor belt comprises an initial section and an end section, and is configured for receiving the material to be treated at the initial section and to bring it towards the end section;
- the first collection element is located immediately downstream of the end section of the conveyor belt, below it;
- the second collection element is located beyond the first collection element, along the direction defined by the conveyor belt;
- the blower and the main chamber are configured for generating an air flow parallel to the conveyor belt; and
- the recirculation ducts connect the inside of the main chamber to the blower.

Such an aeraulic separation machine allows to effectively divide the material to be treated based on the density of the fragments. In particular, the aeraulic separation machine allows fragments of density higher than a predetermined threshold value to be removed from the flow of material to be treated. In this way, the fragments of stainless steel or other hard materials that cannot be removed by the metal fragment separation station (upstream) and that could pose a problem for the shredder (downstream) are removed from the material to be treated. These fragments, which are not of interest for the purposes of this discussion, are sent to other forms of disposal.

Advantageously, the at least one optical separator is configured for the removal of the fragments containing non-polyolefin polymers, such as polyethylene terephthalate (PET), polystyrene (PS), polycarbonate (PC), acrylonitrile-butadiene-styrene (ABS) and polyvinyl chloride (PVC), and for the removal of paper, cardboard and textile components.

As is known, PVC, due to the presence of chlorine, represents a problem for recycling. The other non-polyolefin polymers and, even more so, non-plastic materials, are not suitable for chemical recycling. The optical separator allows to reliably remove PVC and all other unwanted polymers and materials.

Preferably the screen is configured for removing from the flow of material to be treated the fragments with dimensions smaller than 2 cm.

This threshold for the removal of the fragments allows, before shredding the material to be treated, to remove most of the inert materials such as stones, grit and sand.

Preferably the shredder is configured for reducing the particle size of the material to be treated to a value comprised between 35 mm and 50 mm.

These values of the particle size of the material to be treated allow greater effectiveness in subsequent treatments, in particular in the aeraulic separator for shredded material. In addition, shredding allows the separation of the smallest objects contained in the packaging (typically the springs of the sprayers and dispensers) that cannot be separated as an intact object.

Preferably the aeraulic separator comprises: a blower, a main body, a cyclone and recirculation ducts. In turn, the main body comprises, arranged one above the other, a flow distributor, a washing chamber, a labyrinth chamber and a hood. In the aeraulic separator:
- the main body defines in its inside a continuous path for an air flow, fed by the blower;
- at the bottom of the washing chamber there are transfer means configured for translating the material to be treated onto the bottom of the washing chamber, from an inlet to an outlet;
- the transfer means are permeable to a vertical air flow rising from the flow distributor below;
- the labyrinth chamber, located above the washing chamber, comprises a plurality of bulkheads inclined with respect to the flow direction;
- the hood, located above the labyrinth chamber, converges into a first recirculation duct that connects the inside of the main body to the cyclone; and
- a second recirculation duct connects the cyclone to the blower.

This type of aeraulic separator allows to effectively separate the fragments based on polyolefins and XPS on the basis of their bulk density. In particular, the separator sorts the two-dimensional polymer fragments (with bulk density lower than a predefined threshold value) that are suitable for chemical recycling. Differently, the aeraulic separator removes the three-dimensional fragments (with bulk density higher than a predefined threshold value) that are sent to other forms of treatment.

In some embodiments, the plant of the invention further comprises a packaging station configured for packaging the two-dimensional polyolefin fraction so that it can be easily stored or transported.

The packaging station allows to prevent the two-dimensional polyolefin fraction from being dispersed, contaminated or soiled downstream of the plant of the invention.

In other embodiments, the plant of the invention further comprises a pyrolytic reactor, configured for subjecting the two-dimensional polyolefin fraction to pyrolysis and for obtaining pyrolytic oil. Preferably, the plant also comprises a thermal reactor, configured for subjecting the pyrolytic oil to cracking and for obtaining regenerated monomers (olefins).

These additional components of the plant allow to achieve the chemical recycling of the polymers, i.e. their reduction into regenerated monomers that are available for the production of new polymers. Such type of recycling is extremely desirable.

In accordance with a second aspect, the invention concerns a method for sorting polyolefin-based waste. The method of the invention comprises the steps of:
- providing a mass of loose waste deriving from the separate collection of plastics;
- dosing the loose waste in order to obtain a flow of material to be treated having a controlled flow rate;
- removing the macroscopic metal fragments from the flow of material to be treated;
- removing from the flow of material to be treated the non-polyolefin polymers;
- removing from the flow of material to be treated the cellulosic components and the textile components;
- removing from the flow of material to be treated the foreign bodies with dimensions smaller than a predefined minimum value;
- reducing the particle size of the material to be treated to a predefined value; and
- removing the metal fragments from the flow of material to be treated.

Furthermore, after the steps of removing the macroscopic metal fragments, removing the non-polyolefin polymers, removing the cellulosic components and the textile components, removing the foreign bodies, and reducing the particle size of the material to be treated, the method comprises the steps of:
- removing the three-dimensional polyolefin fraction, comprising the polyolefin fragments with bulk density higher than a predefined threshold value; and
- making available the two-dimensional polyolefin fraction, comprising the polyolefin fragments with bulk density lower than the predefined threshold value;
wherein the two-dimensional polyolefin fraction comprises polyolefins, a percentage of less than 20% of extruded polystyrene and a percentage of less than 2% of metal fragments and/or foreign bodies.

The method of the invention allows to efficiently obtain the two-dimensional polyolefin fraction, suitable for chemical recycling.

In accordance with some embodiments, the method of the invention further comprises the preliminary steps of:
- providing bales of compacted polymer-based waste deriving from the separate collection of plastics;
- opening the bales so as to obtain a mass of loose raw waste; and
- treating the mass of loose raw waste so as to make available a pre-treated loose waste mass containing a mixture of polymers and a percentage of metal fragments and other foreign bodies comprised within 30% by weight of the total.

These preliminary steps allow the method of the invention to obtain a two-dimensional polyolefin fraction of particularly high quality.

Preferably, the step of removing the three-dimensional polyolefin fraction is carried out by passing the flow of material to be treated through an ascending air flow that drags the two-dimensional polyolefin fragments with it.

This aeraulic separation is particularly efficient and reliable.

In accordance with some embodiments, the method of the invention further comprises the step of packaging the two-dimensional polyolefin fraction so that it can be easily stored or transported.

This further step of the method allows to make available on the market a secondary raw material perfectly suitable for chemical recycling.

In accordance with other embodiments, the method of the invention further comprises the step of subjecting the two-dimensional polyolefin fraction to pyrolysis so as to obtain pyrolytic oil. Preferably the method comprises the further step of subjecting the pyrolytic oil to thermal cracking for the production of regenerated plastic monomers.

These further steps of the method allow to achieve the chemical recycling of the polymers, i.e. their reduction into regenerated monomers that are available for the production of new polymers. Such type of recycling is extremely desirable.

Further features and purposes of the present invention will become more evident from the description below.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and components, materials and/or similar elements in different figures are indicated by similar reference numerals, where appropriate. Moreover, for clarity of illustration, certain references may not be repeated in all drawings.

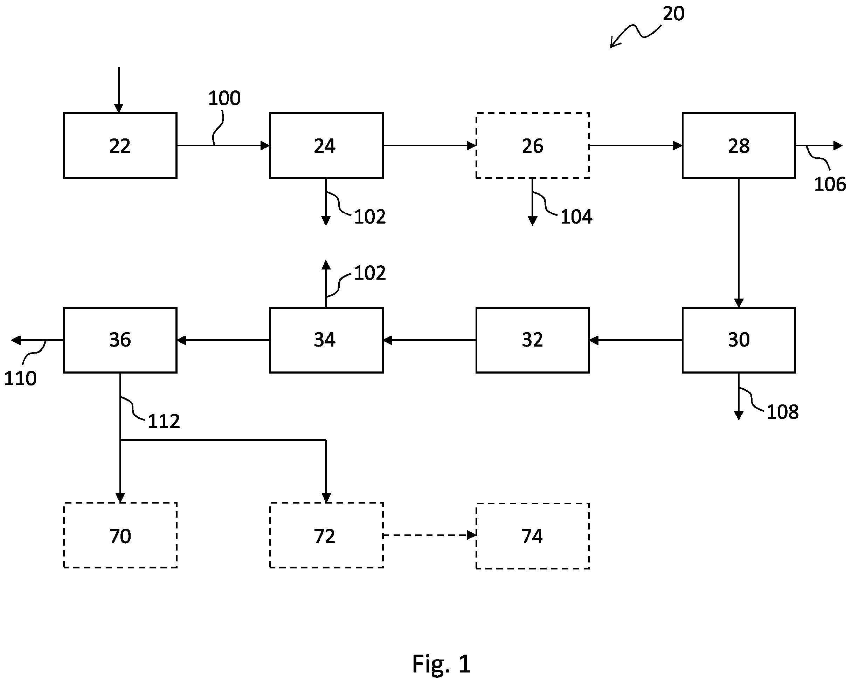

Figure 1 represents a block diagram of a waste sorting plant, in accordance with the invention;
figure 2 schematically represents a partially sectional view of an aeraulic separation machine for waste, in accordance with the prior art, used in some embodiments of the plant of figure 1; and
figure 3 schematically represents a partially sectional view of an aeraulic separator for polymeric waste, used in the plant of Figure 1.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The description addresses in detail the peculiar technical aspects and features of the invention, while the aspects and technical features which are known per se can be only mentioned. In these respects, what is stated above with reference to the prior art remains valid.

The use of "for example", "etc.", "or" indicates non-exclusive alternatives without limitation, unless otherwise indicated. The use of "comprises" and "includes" means "comprises or includes, but not limited to", unless otherwise indicated.

The plant of the invention is intended to be used in the presence of gravity acceleration g. In the following discussion, it is intended that the gravity acceleration uniquely defines the vertical direction and the horizontal directions perpendicular to it.

Furthermore, still with reference to the gravity acceleration, the terms "above", "high", "upper" and the like are uniquely defined with respect to the terms "below", "low", "lower" and the like.

In the following description reference is made to geometric concepts (parallel, perpendicular, symmetrical, etc.) and to geometric entities (plane, axis, etc.). As the person skilled in the art can well understand, such expressions are not to be understood in the abstract and perfect sense of pure geometry, but they are to be interpreted in relation to the technical scope of the invention and the typical tolerances of the field.

In the following discussion, reference is made to the sorting of a certain fraction of waste. By this expression is meant the progressive action that, starting from a heterogeneous mass of waste, gradually removes all unwanted fractions (metals, inert, unwanted polymers) to finally obtain the only fraction desired for chemical recycling (i.e. the two-dimensional polyolefin fraction).

The plant and the method of the invention are configured for making available a secondary raw material which is hereinafter referred to as "two-dimensional polyolefin fraction"; the latter is a mixture of polymer fragments composed largely of polyolefins (polypropylene and polyethylene) and possibly of a percentage of less than 20% of extruded polystyrene (XPS). Other materials (e.g. other polymers or other residues of aggregates, metals or foreign bodies) are present in negligible amounts, for example in a percentage of less than 2% of the total by weight. In addition, the "two-dimensional polyolefin fraction" is composed of fragments deriving from the shredding of films and membranes, hence the "two-dimensional" specification.

In the following discussion, continuous reference is made to the flow of material to be treated, the path of which is followed by describing the characteristics thereof and the operation of the plant. Although the same expression is always used, the actual composition of the material to be treated varies constantly throughout the plant, as various fractions are gradually removed and sent to other treatments. Usually, at the beginning of the plant, the material to be treated is composed of the fraction of municipal solid waste that derives from the separate collection of the so-called plastics. In some cases, as provided for by the companies themselves that deal with waste collection, this fraction also contains originally the fraction of metal waste. In addition, this waste fraction mistakenly contains other unwanted materials, such as for example aggregates and PVC.

In accordance with some embodiments, the material to be treated according to the invention is only a fraction, sorted in a manner known per se, of the waste deriving from the separate collection of plastics. In other words, in some cases, the plant and the method of the invention should be preceded by a coarser separation in order to remove most of the foreign bodies and inerts present in the waste. In this way the material to be treated in the plant and with the method of the invention is a raw mixture composed mainly of polyolefins (polypropylene and polyethylene) and possibly of extruded polystyrene (XPS), while other materials (for example other polymers or other residues of aggregates or foreign bodies) are present in a significantly lower amount, for example in a percentage of less than 30% of the total.

In accordance with a first aspect, the invention concerns a plant 20 for sorting polyolefin-based waste. The plant 20 of the invention comprises:
- a feeding station 22, configured for receiving in input waste deriving from the separate collection of plastics and to dose the waste in order to release in output a flow of material to be treated 100 having a controlled flow rate;
- a first station 24 configured for removing the metal fragments 102 from the flow of material to be treated 100;
- at least one optical separator 28 configured for removing from the flow of material to be treated 100 the non-polyolefin polymers 106 the cellulosic components and the textile components;
- a screen 30 configured for removing from the flow of material to be treated 100 the foreign bodies 108 with dimensions smaller than a predefined minimum value;
- a shredder 32 configured for reducing the particle size of the material to be treated 100 to a predefined value; and
- a second station 34 for the removal of the metal fragments 102 from the flow of material to be treated 100;
and wherein, downstream of the first station 24 for the removal of the metal fragments 102, downstream of the optical separator 28, downstream of the screen 30, downstream of the shredder 32, downstream of the second station 34 for the removal of the metal fragments 102, the plant 20 further comprises an aeraulic separator 36 configured for separating the three-dimensional polyolefin fraction 110, comprising the fragments with bulk density higher than a predefined threshold value, from the two-dimensional polyolefin fraction 112, comprising the fragments with bulk density lower than the predefined threshold value.

In accordance with some embodiments, upstream of the feeding station 22, the plant comprises a bale opener machine 21, configured for receiving in input the bales of compacted waste, as it is, arriving from the separate collection or, preferably, from the previous sorting operations carried out starting from the separate collection. The ball opener machine 21 is further configured for opening the bales, so as to obtain from each bale a mass of loose waste, and to make such loose waste available to the feeding station 22. The feeding station 22 is configured for releasing in output a flow of material to be treated 100 having a controlled flow rate, preferably having an almost constant flow rate.

Downstream of the feeding station 22 there is located a first station 24 configured for the removal of the metal fragments 102 from the flow of material to be treated 100. In this first station 24, located immediately downstream of the feeding station 22, the metal fragments 102 with macroscopic dimensions are removed. For example, the metal fragments 102 having a size of about a can or higher are removed.

In the metal fragment removal station 102, the ferrous metal fragments are removed by application of a magnetic field that attracts them, separating them from the flow of material to be treated 100. For this purpose, a magnetic iron-remover is used which, in a manner known per se, can take on many different forms depending on specific needs. By way of example, an overbelt-type magnetic iron-remover may be employed in the plant 20 of the invention.

Together with the magnetic iron-remover, the first station 24 for the removal of the metal fragments 102 also comprises an ECS (*Eddy Current Separator*), i.e. a non-ferrous metal separator. Such a separator, known per se, is able to remove the non-ferrous metal fragments 102, typically of aluminium and copper, from the flow of material to be treated 100.

Of course, as the skilled person can well understand, the metal fragments 102, ferrous and not, represent a fraction of great interest and are therefore routed towards other treatments aimed at making them available for recycling. However, for the purposes of this discussion, the main interest is reserved for the remaining fraction, mostly polymeric, which constitutes the material to be treated 100. The flow and the treatments reserved for this specific fraction will therefore be described below.

In accordance with some embodiments, downstream of the station 24 for the removal of the metal fragments 102, the plant 20 comprises an aeraulic separation machine 26. Such a machine, known per se, is configured for removing from the flow of material to be treated 100 the heavy fractions 104, i.e. those comprising fragments with a density higher than a predefined threshold value. By way of example, the predefined threshold value for density may be 1150 kg/m³. This aeraulic separation machine 26 has the function of preserving the structural integrity of the subsequent shredder 32. In fact, fragments can be found in the flow of material to be treated 100 which, due to their nature, cannot be separated from the station for the removal of the metal fragments 102 located upstream. Such fragments, which may be for example in stainless steel or inert materials, represent a danger for the shredder 32.

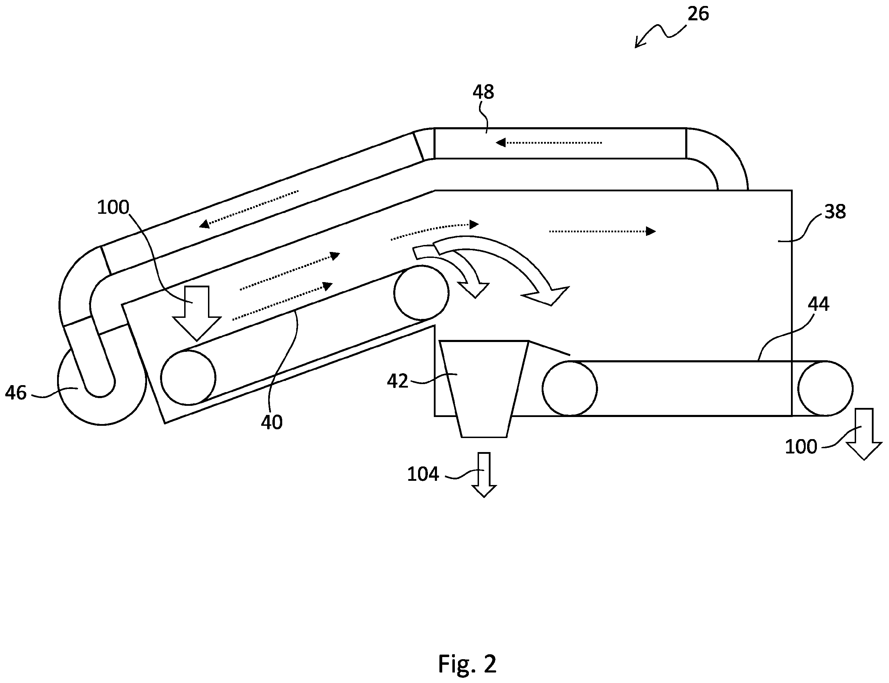

An embodiment of the aeraulic separation machine 26 is described below with particular reference to Figure 2. Preferably, the aeraulic separation machine 26 comprises a main chamber 38, inside which a conveyor belt 40, a first collection element 42 and a second collection element 44 are arranged; the aeraulic separation machine 26 further comprises a blower 46 and air recirculation ducts 48. The conveyor belt 40 comprises an initial section and an end section, and is configured for receiving the material to be treated 100 at the initial section and to bring it towards the end section. The first collection element 42 is located immediately downstream of the end section of the conveyor belt 40, below it. The second collection element 44 is instead located beyond the first collection element 42, along the same direction defined by the conveyor belt 40. The blower 46 and the main chamber 38 of the machine 26 are configured for generating an air flow parallel to the conveyor belt 40. In figure 2 the air flow is schematically represented by the dotted arrows. The recirculation ducts 48 connect the inside of the main chamber 38 to the blower 46.

During operation of the machine 26, the material to be treated 100 is dragged by the conveyor belt 40 and is accompanied by the air flow parallel thereto, generated by the blower 46. At the end of the conveyor belt 40, the denser fractions 104 fall vertically by gravity into the first collection element 42 (e.g. a hopper), which is located immediately at the end of the conveyor belt 40, below it. Differently, the less dense fractions of the material are dragged by the air stream, pass the first collection element 42, and fall into the second collection element 44 (e.g., a chute and/or a second conveyor belt 40 or another hopper). The lighter fractions constitute, downstream of the aeraulic separation machine 26, the material to be treated 100. The air flow, without further fractions of polymeric material, is then collected in the recirculation ducts 48 and returned to the blower 46.

As the skilled person can well understand, by adjusting the speed of the conveyor belt 40 and the power of the blower 46 (i.e. the intensity of the air flow), it is possible to vary within certain limits the threshold value that separates the so-called heavy fractions 104 (i.e. the denser ones, which thus fall into the first collection element 42) from the so-called light fractions (i.e. the less dense ones, which thus fall into the second collection element 44).

An aeraulic separation machine 26 of this type is marketed by Nihot Recycling Technology B.V. of Amsterdam (NL).

Downstream of the station 24 for the removal of the metal fragments, the plant 20 comprises at least one optical separator 28, known per se. The optical separator 28 is configured for optically reading the flow of material to be treated 100, in order to eliminate unwanted materials such as cellulosic materials (such as paper or cardboard), textile materials and non-polyolefin polymers 106 that need not be present in the material made available at the end of the plant 20. Typically, in addition to the cellulose-based and textile materials, the optical separator 28 is configured for removing polyethylene terephthalate (PET), polystyrene (PS), polycarbonate (PC), acrylonitrile-butadiene-styrene (ABS), polyvinylchloride (PVC), and any other non-polyolefin-based polymers. These polymers are sent for proper disposal. Since each optical separator 28 is configured for processing a predetermined flow rate of material to be treated 100, the number of optical separators 28 present in the plant 20 may vary, in order to ensure the overall flow rate of material to be treated 100.

Downstream of the optical separator 28, the plant 20 comprises a screen 30. The screen 30 is configured for separating the foreign bodies 108 having dimensions lower than a threshold value, in particular to separate the foreign bodies 108 of a siliceous nature. This specific fraction of material contains most of the inert materials (such as for example glass, stones, grit and sand) that must be removed from the flow of material to be treated 100. As the skilled person can well understand, the threshold value for the dimensions of the foreign bodies 108 to be removed is defined by the dimensions of the meshes of the screen 30 itself. By way of example, the threshold value for the fragment dimensions may be 2 cm. By way of example, a rotating, disc or ballistic type screen 30 may be employed in the plant 20 of the invention.

Downstream of the screen 30, the plant 20 then comprises a shredder 32 configured for receiving in input the over-screen, i.e. the material to be treated 100 that passes through the screen 30 without falling between the meshes, and for shreding it, reducing its particle size within a predefined range. Preferably, the particle size of the material exiting from the shredder 32 is comprised between 35 mm and 50 mm.

Downstream of the shredder 32, the plant 20 comprises a second station 34 for the removal of the metal fragments 102. The material to be treated 100 exiting from the shredder 32 may in fact contain other metal fragments 102 that up to this point have remained trapped in the polymeric material, such as for example the springs of the liquid soap dispensers or of the sprayers. Shredding the material to be treated 100 allows to free such metal fragments 102 that at this stage of the processing can be successfully removed. Advantageously, the second station 34 for the removal of the metal fragments 102 is similar to the first station 24 for the removal of the metal fragments 102 described above.

At this point in the plant 20, following the removal of the metal fragments 102, the heavy fractions 104, the non-polyolefin polymers 106 and the foreign bodies 108, the residual flow of material to be treated 100 is substantially composed of polyolefins, in two-dimensional and three-dimensional form.

Downstream of all the components described above (i.e. downstream of the first station 24 for the removal of the metal fragments 102, of the optical separator 28, of the screen 30, of the shredder 32, and of the second station 34 for the removal of the metal fragments 102), the plant 20 comprises an aeraulic separator 36 configured for separating the three-dimensional polyolefin fraction 110, comprising the fragments with bulk density higher than a predefined threshold value, from the two-dimensional polyolefin fraction 112, comprising the fragments with bulk density lower than the predefined threshold value.

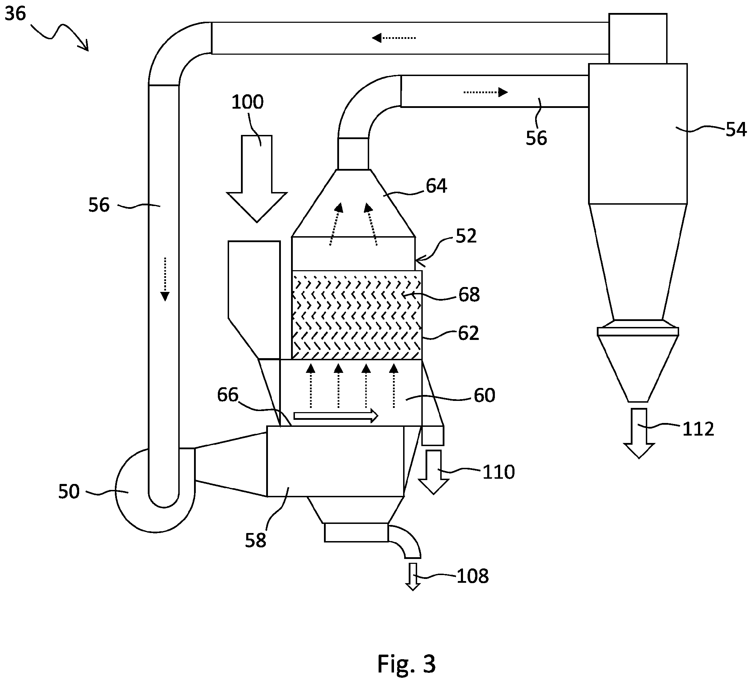

A possible embodiment of such an aeraulic separator 36, configured for separating the three-dimensional polyolefin fraction 110 from the two-dimensional polyolefin fraction 112, is described below with specific reference to Figure 3. In accordance with what is described above, a first polyolefin fraction 110 comprises the fragments deriving from containers and bottles: such fragments have a bulk density higher than a predefined threshold value and are therefore referred to, in the present discussion, as "three-dimensional". Otherwise, a second polyolefin fraction 112 comprises the fragments deriving from films and membranes: such fragments have a bulk density lower than the predefined threshold value and are therefore referred to, in the present discussion, as "two-dimensional". By way of example, a predefined threshold value for bulk density may be 30 kg/m³.

The bulk density (or apparent density), in a manner widely known per se, is the ratio between the mass of a predefined type of homogeneous material and the volume that it spontaneously occupies, in the absence of compression, compaction or similar actions. This volume therefore comprises a considerable amount of air, whose percentage on the total depends to a large extent on the particle size and the shape of the fragments of the material whose bulk density is calculated. By way of example, consider that the actual density of polypropylene and polyethylene is comprised between 855 kg/m³ and 960 kg/m ³, while the limit considered herein for the bulk density (or apparent density) of the same materials may be about 30 kg/m³.

Preferably, the aeraulic separator 36 comprises a blower 50, a main body 52, a cyclone 54 and recirculation ducts 56. The main body 52 comprises, arranged one above the other, a flow distributor 58, a washing chamber 60, a labyrinth chamber 62 and a hood 64. The main body 52 defines in its inside a continuous path for an air flow, fed by the blower 50. In figure 3 the air flow is schematically represented by the dotted arrows. At the bottom of the washing chamber 60 there are located transfer means 66 configured for translating the material to be treated 100 onto the bottom of the washing chamber 60, from an inlet to an outlet. The transfer means 66 are permeable to a vertical air flow rising from the flow distributor 58 below. The labyrinth chamber 62, located above the washing chamber 60, comprises a plurality of bulkheads 68 inclined with respect to the flow direction. The hood 64, located above the labyrinth chamber 62, converges into a first recirculation duct 56 that connects the inside of the main body 52 to the cyclone 54. A second recirculation duct 56 connects the cyclone 54 to the blower 50.

Preferably the inlet to the washing chamber 60 as well as the outlets comprise rotating valves and/or movement screws. These members are configured for allowing the passage of material (in input or in output, respectively) while preventing the escape of air from the inside of the main body 52.

Also for the aeraulic separator 36, by adjusting the intensity of the air flow, it is possible to vary, within certain limits, the threshold value that separates the so-called three-dimensional fractions 110 (which exit from the outlet of the washing chamber 60) from the so-called two-dimensional fractions 112 (which thus exit from the cyclone 54).

During operation of the aeraulic separator 36, the material to be treated 100 is introduced through the inlet of the washing chamber 60 and is thus distributed on the transfer means 66. Following the treatments undergone previously, which have been described above, the material to be treated 100 comprises almost exclusively two-dimensional polyolefin fragments 112 (that is, deriving from films and membranes) mixed with three-dimensional polyolefin fragments 110 (deriving from containers and bottles). While the material to be treated 100 passes through the washing chamber 60, the air flow generated by the blower 50 enters the flow distributor 58 and rises into the washing chamber 60 passing through the transfer means 66 and thus the material to be treated 100 itself. During operation of the aeraulic separator 36, the ascending air flow drags the two-dimensional polyolefin fragments 112 with it. For these fragments 112, in fact, the forces of an aerodynamic nature, which in other words arise from the interaction with the air flow, are significantly greater than the weight force. Thanks to this, the two-dimensional polyolefin fragments 112 are dragged by the air flow through the labyrinth chamber 62, to then access the hood 64 and arrive at the cyclone 54.

For the three-dimensional fragments 110, the ratio of the aerodynamic forces to the weight force is different. For some of these three-dimensional fragments 110, the weight force is significantly greater than the aerodynamic forces. These three-dimensional fragments remain on the transfer means 66, substantially undisturbed by the ascending air flow, and pass through the entire washing chamber 60 until they reach the outlet thereof. For other three-dimensional fragments 110, the weight force and the aerodynamic force may be close to equilibrium. These three-dimensional fragments 110 can be momentarily dragged by the air flow, but the labyrinth chamber 62 prevents them from being dragged completely as happens with the two-dimensional fragments 112. Inside the labyrinth chamber 62, the impacts that inevitably occur between the bulkheads 68 and the polymer fragments dragged by the flow, cancel the kinetic energy of the latter. Despite the repeated impacts, however, the two-dimensional fragments 112 constantly draw a sufficient amount of energy from the air flow so that they can continue towards the hood 64. Differently, the three-dimensional fragments 110 lose energy as a result of the impacts with the bulkheads 68 and fall again on the transfer means 66 below. In this way, these three-dimensional fragments 110 also cross the entire washing chamber 60 until they reach the outlet thereof.

Differently, the two-dimensional fragments 112 are dragged through the hood 64 and then to the cyclone 54, where they are separated from the air flow. The two-dimensional fragments 112 are then released at the exit of the cyclone 54, while the air flow, via the recirculation ducts 56, returns to the blower 50.

Preferably, below the flow distributor 58, there is located a further outlet intended to expel any foreign bodies 108. In fact, despite all the previous sortings, some foreign bodies 108 (typically sand or grit) could still be present in the mass of the material to be treated 100. These foreign bodies 108 are sufficiently small and heavy to fall through the transfer means 66, without being in the least affected by the action of the ascending air flow. Preferably, a screw is located at the bottom of the flow distributor 58 for the removal, through a dedicated opening, of the foreign bodies 108 that are collected therein.

As the skilled person can well understand, the aeraulic separator 36 therefore represents the final component of the plant 20 of the invention. This plant 20 allows to obtain, downstream of the aeraulic separator 36, the desired two-dimensional polyolefin fraction 112, i.e. the mixture of polyolefin-based fragments described initially, having the technical characteristics suitable for use in a pyrolytic reactor 72. This mixture in fact consists only of two-dimensional fragments of polyolefins (polypropylene and polyethylene) and, in percentages comprised within 20%, of extruded polystyrene, while other materials are present in a percentage of less than 2% of the total.

In accordance with some embodiments, downstream of the aeraulic separator 36, the plant 20 further comprises a packaging station 70 configured for packaging the two-dimensional polyolefin fraction 112, so that it can be easily stored or transported. This solution is particularly suitable in the case where the chemical recycling is carried out separately from the sorting process of the two-dimensional polyolefin fraction 112, also to prevent the dispersion or fouling of the obtained fraction.

Otherwise, in accordance with other embodiments, the plant 20 further comprises a pyrolytic reactor 72, configured for subjecting the two-dimensional polyolefin fraction 112 to pyrolysis so as to obtain pyrolytic oil. Preferably, the plant 20 may also comprise a thermal reactor 74, configured for subjecting the pyrolytic oil to cracking so as to obtain regenerated monomers.

Such a solution is particularly suitable in case the chemical recycling is carried out immediately downstream of the sorting process of the two-dimensional polyolefin fraction 112.

As the skilled person can well understand, obtaining regenerated monomers (olefins, in particular), i.e. the chemical recycling of polymers, represents an extremely advantageous solution compared to other forms of disposal of the polymers themselves.

In accordance with a second aspect, the invention concerns a method for sorting polyolefin-based waste, comprising the steps of:
- providing a mass of loose waste deriving from the separate collection of plastics;
- dosing the loose waste in order to obtain a flow of material to be treated 100 having a controlled flow rate;
- removing the macroscopic metal fragments 102 from the flow of material to be treated 100;
- removing from the flow of material to be treated 100 the non-polyolefin polymers 106;
- removing from the flow of material to be treated 100 the cellulosic components and the textile components;
- removing from the flow of material to be treated 100 the foreign bodies 108 with dimensions smaller than a predefined minimum value;
- reducing the particle size of the material to be treated 100 to a predefined value; and
- removing the metal fragments 102 from the flow of material to be treated 100;

wherein, after the steps of removing the macroscopic metal fragments 102, removing the non-polyolefin polymers 106, removing the cellulosic components and the textile components, removing the foreign bodies 108, and reducing the particle size of the material to be treated 100, the method further comprises the steps of:
   - removing the three-dimensional polyolefin fraction 110, comprising the polymer fragments with bulk density greater than a predefined threshold value; and
   - making available the two-dimensional polyolefin fraction 112, comprising the polymer fragments with bulk density lower than the predefined threshold value,
wherein the two-dimensional polyolefin fraction 112 comprises polyolefins, a percentage of less than 20% of extruded polystyrene and a percentage of less than 2% of metal fragments 102 and/or foreign bodies 108.

In accordance with some embodiments of the invention, the method further comprises the preliminary steps of providing bales of compacted polymer-based waste and opening the bales so as to obtain a mass of loose raw waste. This mass of loose raw waste, which derives from the separate collection of plastics without any intermediate sorting operation, has an unknown a priori composition; in general, such loose raw waste has a composition consisting of a mixture of polymers of various nature and an unknown a priori percentage of metal fragments 102 and other foreign bodies 108.

Preferably the method of the invention comprises the preliminary step of treating the mass of loose raw waste so as to make available a pre-treated loose waste mass containing a mixture of polymers and a percentage of metal fragments 102 and other foreign bodies 108 comprised within 30% by weight of the total. This pre-treated loose waste mass constitutes an optimal starting base, because it allows the method of the invention to finally obtain a two-dimensional polyolefin fraction 112 having the optimal characteristics for use in chemical recycling.

In accordance with some embodiments of the invention, the method further comprises, upstream of the step of reducing the particle size of the material to be treated 100, the step of removing from the flow of material to be treated 100 the heavy fractions 104, comprising fragments having a density higher than a predefined threshold value.

Preferably, the step of removing the three-dimensional polyolefin fraction 110 is carried out by passing the flow of material to be treated 100 through an ascending air flow that drags the two-dimensional polymer fragments with it.

In accordance with some embodiments, the method of the invention further comprises the final step of packaging the two-dimensional polyolefin fraction 112 obtained so that it can be easily stored or transported.

In accordance with other embodiments, the method of the invention instead comprises the final steps of subjecting the two-dimensional polyolefin fraction 112 to thermal cracking for the production of pyrolytic oil; and subjecting the pyrolytic oil to cracking for the production of regenerated plastic monomers.

Many other features of the method of the invention can be deduced by the skilled person from the description given above of the plant 20, in particular where its operation is described. Similarly, other characteristics of the plant 20 of the invention can be deduced by the skilled person from the description of the method provided above.

In light of the above, the skilled person may well understand how the invention overcomes the drawbacks highlighted in relation to the prior art.

In particular, the present invention makes available a plant and a method for sorting polymer-based waste, which allow to efficiently obtain a two-dimensional polyolefin mixture, solely by means of mechanical sorting processes.

Furthermore, the present invention makes available a plant and a method that make it possible to obtain a polymer fraction suitable for chemical recycling.

Finally, the present invention makes available a plant and a method for sorting a two-dimensional polyolefin mixture, which are particularly effective and reliable.

In conclusion, all the details can be replaced by other technically equivalent elements; the characteristics described in relation to a specific embodiment can also be used in the other embodiments; the materials used, as well as the contingent shapes and dimensions, can be any according to the specific implementation needs without leaving the scope of protection of the following claims.

## Claims

1. Plant (20) for sorting polyolefin-based waste, comprising:
- a feeding station (22), configured for receiving in input waste deriving from the separate collection of plastics and to dose the waste in order to release in output a flow of material to be treated (100) having a controlled flow rate;
- a first station (24) configured for removing the metal fragments (102) from the flow of material to be treated (100);
- at least one optical separator (28) configured for removing from the flow of material to be treated (100) the non-polyolefin polymers (106) the cellulosic components and the textile components;
- a screen (30) configured for removing from the flow of material to be treated (100) the foreign bodies (108) with dimensions smaller than a predefined minimum value;
- a shredder (32) configured for reducing the particle size of the material to be treated (100) to a predefined value;
- a second station (34) for the removal of the metal fragments (102) from the flow of material to be treated (100); and
- an aeraulic separator (36) configured for separating the three-dimensional polyolefin fraction (110), comprising the polyolefin fragments with bulk density higher than a predefined threshold value, from the two-dimensional polyolefin fraction (112), comprising the polyolefin fragments with bulk density lower than the predefined threshold value.

2. Plant (20) according to claim 1, wherein the first station (24) and/or the second station (34) for the removal of the metal fragments (102) from the flow of material to be treated (100) comprise a magnetic iron-remover and an Eddy Current Separator (ECS), i.e. a non-ferrous metal separator.

3. Plant (20) according to claim 1 or 2, further comprising, upstream of the shredder (32), an aeraulic separation machine (26) configured for removing from the flow of material to be treated (100) the heavy fractions (104), comprising fragments having a density higher than a predefined threshold value.

4. Plant (20) according to claim 3, wherein the aeraulic separation machine (26) comprises a main chamber (38), inside which a conveyor belt (40), a first collection element (42) and a second collection element (44) are arranged; wherein the aeraulic separation machine (26) further comprises a blower (46) and air recirculation ducts (48);
wherein:
- the conveyor belt (40) comprises an initial section and an end section, and is configured for receiving the material to be treated (100) at the initial section and to bring it towards the end section;
- the first collection element (42) is located immediately downstream of the end section of the conveyor belt (40), below it;
- the second collection element (44) is located beyond the first collection element (42), along the direction defined by the conveyor belt (40);
- the blower (46) and the main chamber (38) are configured for generating an air flow parallel to the conveyor belt (40); and
- the recirculation ducts (56) connect the inside of the main chamber (38) to the blower (46).

5. Plant (20) according to one or more of the preceding claims, wherein the optical separator (28) is configured for the removal of the fragments containing polyethylene terephthalate (PET), polystyrene (PS), polycarbonate (PC), acrylonitrile-butadiene-styrene (ABS) and polyvinylchloride (PVC), and for the removal of paper, cardboard and textile components.

6. Plant (20) according to one or more of the preceding claims, wherein the screen (30) is configured for removing from the flow of material to be treated (100) the foreign bodies (108) with dimensions smaller than 2 cm.

7. Plant (20) according to one or more of the preceding claims, wherein the shredder (32) is configured for reducing the particle size of the material to be treated (100) to a value comprised between 35 mm and 50 mm.

8. Plant (20) according to one or more of the preceding claims, wherein the aeraulic separator (36) comprises: a blower (50), a main body (52), a cyclone (54) and recirculation ducts (56); the main body (52) comprising, arranged one above the other, a flow distributor (58), a washing chamber (60), a labyrinth chamber (62) and a hood (64); wherein
- the main body (52) defines in its inside a continuous path for an air flow, fed by the blower (50);
- at the bottom of the washing chamber (60) there are located transfer means (66) configured for translating the material to be treated (100) onto the bottom of the washing chamber (60), from an inlet to an outlet;
- the transfer means (66) are permeable to a vertical air flow rising from the flow distributor (58) below;
- the labyrinth chamber (62), located above the washing chamber (60), comprises a plurality of bulkheads (68) inclined with respect to the flow direction;
- the hood (64), located above the labyrinth chamber (62), converges into a first recirculation duct (56) that connects the inside of the main body (52) to the cyclone (54); and
- a second recirculation duct (56) connects the cyclone (54) to the blower (50).

9. Plant (20) according to one or more of the preceding claims, further comprising:
- a pyrolytic reactor (72), configured for subjecting the two-dimensional polyolefin fraction (112) to pyrolysis and for obtaining pyrolytic oil, and
- a thermal reactor (74), configured for subjecting the pyrolytic oil to thermal cracking and for obtaining regenerated monomers.

10. Method for sorting polyolefin-based waste, comprising the steps of:
- providing a mass of loose waste deriving from the separate collection of plastics;
- dosing the loose waste in order to obtain a flow of material to be treated (100) having a controlled flow rate;
- removing the macroscopic metal fragments (102) from the flow of material to be treated (100);
- removing from the flow of material to be treated (100) the non-polyolefin polymers (106);
- removing from the flow of material to be treated (100) the cellulosic components and the textile components;
- removing from the flow of material to be treated (100) the foreign bodies (108) with dimensions smaller than a predefined minimum value;
- reducing the particle size of the material to be treated (100) to a predefined value; and
- removing the metal fragments (102) from the flow of material to be treated (100);
wherein, after the steps of removing the macroscopic metal fragments (102), removing the non-polyolefin polymers (106), removing the cellulosic components and the textile components, removing the foreign bodies (108), and reducing the particle size of the material to be treated (100), the method further comprises the steps of:
- removing the three-dimensional polyolefin fraction (110), comprising the polyolefin fragments with bulk density higher than a predefined threshold value; and
- making available the two-dimensional polyolefin fraction (112), comprising the polyolefin fragments with bulk density lower than the predefined threshold value,
wherein the two-dimensional polyolefin fraction (112) comprises polyolefins, a percentage of less than 20% of extruded polystyrene and a percentage of less than 2% of metal fragments (102) and/or foreign bodies (108).

11. Method according to the preceding claim, further comprising the preliminary steps of:
- providing bales of compacted polymer-based waste deriving from the separate collection of plastics;
- opening the bales so as to obtain a mass of loose raw waste; and
- treating the mass of loose raw waste so as to make available a pre-treated loose waste mass containing a mixture of polymers and a percentage of metal fragments (102) and other foreign bodies (108) comprised within 30% by weight of the total.

12. Method according to claim 10 or 11, wherein the step of removing the three-dimensional polyolefin fraction (110) is carried out by passing the flow of material to be treated (100) through an ascending air flow that drags the two-dimensional polyolefin fragments (112) with it.

13. Method according to one or more of claims 10 to 12, further comprising the step of packaging the two-dimensional polyolefin fraction (112) so that it can be easily stored and/or transported.

14. Method according to one or more of claims 10 to 12, further comprising the steps of:
- subjecting the two-dimensional polyolefin fraction (112) to pyrolysis in order to obtain pyrolytic oil; and
- subjecting the pyrolytic oil to thermal cracking for the production of regenerated plastic monomers.
